# EUROPEAN PATENT APPLICATION

(11) **EP 4 645 457 A2**
(43) Date of publication of application: **05.11.2025**
(21) Application number: 25167973.4
(22) Date of filing: 02.04.2025
(51) Int. Cl.: H01M 4/36, H01M 4/505, H01M 4/525, H01M 4/58, H01M 4/131, H01M 10/0525, H01M 4/02

(54) **POSITIVE ELECTRODE AND RECHARGEABLE LITHIUM BATTERY INCLUDING THE POSITIVE ELECTRODE**

(30) Priority: 29.04.2024 KR 20240057103
(71) Applicant: Samsung SDI Co., Ltd., Yongin-si, Gyeonggi-do 17084 (KR)
(72) Inventor: KIM, Young-Ki, Yongin-si, 17084 (KR); CHOI, Aram, Yongin-si, 17084 (KR); KIM, Sangmi, Yongin-si, 17084 (KR); DOO, Sungwook, Yongin-si, 17084 (KR); KANG, Gwiwoon, Yongin-si, 17084 (KR); LEE, Soonrewl, Yongin-si, 17084 (KR)
(74) Representative: Marks & Clerk LLP

(57) **Abstract**

A positive electrode for a rechargeable lithium includes a current collector. A first active material layer is provided on the current collector, and the first active material layer includes first particles, second particles, a first binder, and a first conductive material. A second active material layer is provided on the first active material layer, and the second active material layer includes third particles, a second binder, and a second conductive material. The first particles contain an olivine structured compound, the second particles contain a layered compound, the third particles contain an olivine structured compound, the first particles are single particles, and the first particles have an average diameter of about 100 nm to about 2 µm. The first active material layer and the second active material layer have a cobalt (Co) content of less than about 100 ppm. An average diameter of the second particles is greater than the average diameter of the first particles. The third particles are single particles, and the third particle have an average diameter of about 100 nm to about 2 µm.

## Description

### BACKGROUND

The present disclosure relates to a positive electrode and a rechargeable lithium battery including the positive electrode. More particularly, the present disclosure relates to a positive electrode including an olivine-based lithium compound and a rechargeable lithium battery including the positive electrode.

The rapid spread of battery-powered devices, such as mobile phones, laptop computers, and electric vehicles, has driven a sharp rise in demand for rechargeable batteries provided with high energy density and high capacity. Accordingly, extensive research efforts have been directed towards improving the performance of rechargeable lithium batteries.

Rechargeable lithium batteries include a positive electrode and a negative electrode, each including an active material that allows intercalation and deintercalation of lithium ions, and an electrolyte solution. The batteries produce electrical energy from redox reactions that take place as lithium ions are intercalated into or deintercalated from the positive electrode and the negative electrode.

### SUMMARY

The present disclosure provides a positive electrode for a rechargeable lithium battery, with the positive electrode being capable of increasing binding force of a positive electrode active material layer with respect to a current collector, reducing resistance of an electrode plate, and facilitating preparation of an electrode plate. The present disclosure also provides a rechargeable lithium battery having excellent capacity and lifetime characteristics along with high operating voltage and energy density.

An embodiment of the present disclosure provides a positive electrode for a rechargeable lithium battery, including a current collector, a first active material layer on the current collector, the first active material layer including first particles, second particles, a first binder, and a first conductive material, and a second active material layer on the first active material layer, the second active material layer including third particles, a second binder, and a second conductive material, wherein the first particles are an olivine structured compound of Formula 1 below, the second particles are a layered compound of Formula 2 below, the third particles are an olivine structured compound of Formula 3 below, the first active material layer and the second active material layer have a cobalt content of less than about 100 ppm, the first particles are single particles, the first particles have an average diameter of about 100 nm to about 2 µm, an average diameter of the second particles is greater than an average diameter of the first particles, the third particles are single particles, and the third particles have an average diameter of about 100 nm to about 2 µm.

Formula 1: Liₐ₁Mnₓ₁Fe_{y1}B1_{z1}PO_{4-b1}

In Formula 1, 0.8≤a1≤1.2, 0.4≤x1≤0.8, 0≤y1≤0.6, 0≤z1≤0.05, 0≤b1≤0.05, and x1 + y1 + z1 = 1 are satisfied, and B1 includes at least one of Al, Ti, V, and Mg.

Formula 2: Liₐ₂Niₓ₂Mn_{z2}Al_{c}2Y_{d2}O_{2-b2}

In Formula 2, 0.8<a2≤1.2, 0.7≤x2≤0.8, 0.2≤z2≤0.3, 0≤c2≤0.02, 0≤d2≤0.003, 0≤b2≤0.05, and x2 + z2 + c2 + d2 = 1 are satisfied, and Y includes at least one of Ti, Mg, Zr, Mo, and Nb.

Formula 3: Liₐ₃Mnₓ₃Fe_{y3}B3_{z3}PO_{4-b3}

In Formula 3, 0.8≤a3≤1.2, 0.4≤x3≤0.8, 0≤y3≤0.6, 0≤z3≤0.05, 0≤b3≤0.05, and x3 + y3 + z3 = 1 are satisfied, and B3 includes at least one of Al, Ti, V, and Mg.

In an embodiment of the present disclosure, a positive electrode for a rechargeable lithium battery includes a current collector, a first active material layer on the current collector, the first active material layer including first particles, second particles, a first binder, and a first conductive material, and a second active material layer on the first active material layer, the second active layer including third particles, a second binder, and a second conductive material, wherein the first particles are an olivine structured compound of Formula 1 below, the second particles are a layered compound of Formula 2 below, the third particles are an olivine structured compound of Formula 3 below, first active material layer and the second active material layer have a cobalt content of less than about 100 ppm, the first particles are single particles, the first particles have an average diameter of about 100 nm to about 2 µm, an average diameter of the second particles is greater than the average diameter of the first particles, the third particles include a plurality of fourth particles aggregated together, each of the third particles has an average diameter of about 3 µm to about 10 µm, the fourth particles are primary particles, and the fourth particles have an average diameter of about 200 nm or less.

Formula 1: Liₐ₁Mnₓ₁Fe_{y1}B1_{z1}PO_{4-b1}

In Formula 1, 0.8≤a1≤1.2, 0.4≤x1≤0.8, 0≤y1≤0.6, 0≤z1≤0.05, 0≤b1≤0.05, and x1 + y1 + z1 = 1 are satisfied, and B1 includes at least one of Al, Ti, V, and Mg.

Formula 2: Liₐ₂Niₓ₂Mn_{z2}Al_{c}2Y_{d2}O_{2-b2}

In Formula 2, 0.8<a2≤1.2, 0.7≤x2≤0.8, 0.2≤z2≤0.3, 0≤c2≤0.02, 0≤d2≤0.003, 0≤b2≤0.05, and x2 + z2 + c2 + d2 = 1 are satisfied, and Y includes at least one of Ti, Mg, Zr, Mo, and Nb.

Formula 3: Liₐ₃Mnₓ₃Fe_{y3}B3_{z3}PO_{4-b3}

In Formula 3, 0.8≤a3≤1.2, 0.4≤x3≤0.8, 0≤y3≤0.6, 0≤z3≤0.05, 0≤b3≤0.05, and x3 + y3 + z3 = 1 are satisfied, and B3 includes at least one of Al, Ti, V, and Mg.

In an embodiment of the present disclosure, a rechargeable lithium battery includes the positive electrode described above.

At least some of the above and other features of the invention are set out in the claims.

### BRIEF DESCRIPTION OF THE FIGURES

The accompanying drawings are included to provide a further understanding of the present disclosure and are incorporated in and constitute a part of this specification. The drawings illustrate embodiments of the present disclosure and, together with the description, serve to explain principles of the present disclosure. In the drawings:
FIG. 1 is a simplified conceptual diagram showing a rechargeable lithium battery according to embodiments of the present disclosure;
FIGS. 2 to 5 are schematic views illustrating rechargeable lithium batteries according to embodiments of the present disclosure. FIG. 2 shows a cylindrical battery, FIG. 3 shows a prismatic battery, and FIGS. 4 and 5 show pouch-type batteries;
FIG. 6 is a cross-sectional view showing a positive electrode for a rechargeable battery according to embodiments of the present disclosure;
FIG. 7 is an enlarged view showing a first active material layer according to embodiments of the present disclosure;
FIG. 8 is an enlarged view showing a second active material layer according to an embodiment of the present disclosure;
FIG. 9 is an enlarged view showing a second active material layer according to another embodiment of the present disclosure;
FIG. 10 is an SEM image showing first particles according to an embodiment of the present disclosure;
FIG. 11 is an SEM image showing second particles according to an embodiment of the present disclosure;
FIG. 12 is an SEM image showing third particles in the form of single particles according to an embodiment of the present disclosure; and
FIG. 13 is an SEM image showing third particles in the form of secondary particles according to another embodiment of the present disclosure.

### DETAILED DESCRIPTION

In order to sufficiently understand the configuration and effects of the present disclosure, preferred embodiments of the present disclosure will be described with reference to the accompanying drawings. It should be noted, however, that the present disclosure is not limited to the following embodiments and may be implemented in various forms and variously modified. The embodiments herein are provided so that the present disclosure will be thorough and complete and will fully convey the scope of the present disclosure to those skilled in the art.

Herein, when a component is referred to as being on another component, the component may be directly on another component, or an intervening third component may be present. In addition, in the drawings, thicknesses of components are exaggerated for effectively describing technical contents. Like reference numerals refer to like elements throughout.

Unless otherwise specified herein, the expression of singular form may include the expression of plural form. In addition, unless otherwise specified, the phrase "A or B" may indicate "A but not B", "B but not A", or "A and B". The terms "comprises" and/or "comprising" used herein do not exclude the presence or addition of one or more other components.

As used herein, the term "combination thereof" may refer to a mixture, a stack, a composite, a copolymer, an alloy, a blend, or a reaction product.

Unless otherwise defined herein, a particle diameter may be an average diameter. In addition, a particle diameter may be defined as an average diameter (D50) indicating the diameter of particles at a cumulative volume of about 50 vol% in particle size distribution. The average diameter (D50) may be measured by methods widely known to those skilled in the art, for example, by a particle size analyzer, an image of transmission electron microscope (TEM), or an image of scanning electron microscope (SEM). Alternatively, the average diameter (D50) may be measured by a measurement device using dynamic light-scattering, wherein data analysis is conducted to count the number of particles for each particle size range, and an average diameter (D50) value may then be obtained through calculation. Alternatively, the average diameter (D50) may be measured using a laser diffraction method. In the measuring using the laser diffraction method, target particles are dispersed in a dispersion medium, introduced into a commercially available laser diffraction particle diameter measuring device (e.g., MT 3000 available from Microtrac, Ltd.), irradiated with ultrasonic waves of about 28 kHz at a power of 60 W, and then an average diameter (D50) based on 50% of the particle diameter distribution in the measuring device may be calculated.

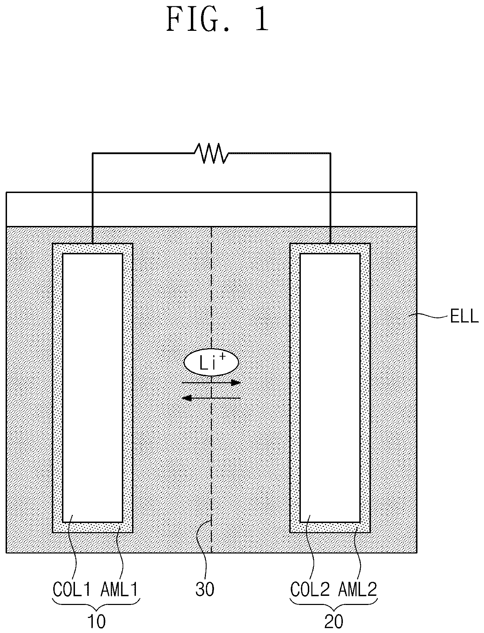

FIG. 1 is a simplified conceptual diagram showing a rechargeable lithium battery according to embodiments of the present disclosure. Referring to FIG. 1, the rechargeable lithium battery may include a positive electrode 10, a negative electrode 20, a separator 30, and an electrolyte solution ELL.

The positive electrode 10 and the negative electrode 20 may be spaced apart from each other by the separator 30. That is, the separator 30 may be disposed between the positive electrode 10 and the negative electrode 20. The positive electrode 10, the negative electrode 20, and the separator 30 may be in contact with the electrolyte solution ELL. The positive electrode 10, the negative electrode 20, and the separator 30 may be impregnated in the electrolyte solution ELL.

The electrolyte solution ELL may be a medium for transferring lithium ions between the positive electrode 10 and the negative electrode 20. In the electrolyte solution ELL, the lithium ions may move through the separator 30 toward the positive electrode 10 or the negative electrode 20.

### Positive Electrode

The positive electrode for a rechargeable lithium battery includes a current collector COL1 and a positive electrode active material layer AML1 on the current collector. The positive electrode active material layer AML1 includes a positive electrode active material and further includes a binder and a conductive material (e.g., an electrically conductive material). The positive electrode 10 may further include an additive that can serve as a sacrificial positive electrode.

Aluminium may be used as the current collector COL1, but the embodiment of the present disclosure is not limited thereto.

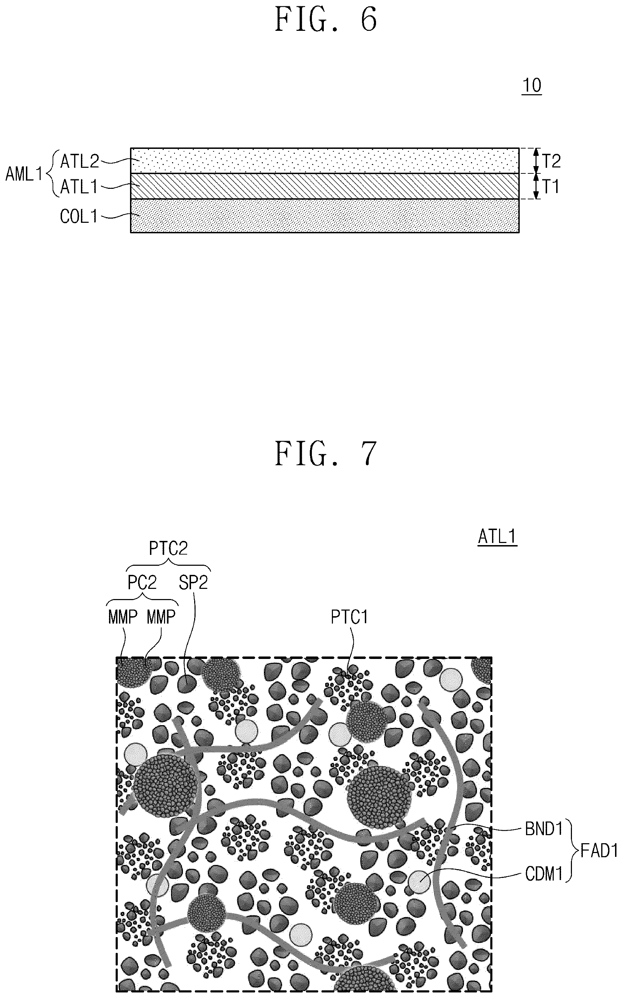

The positive electrode 10 will be described in detail later with reference to FIG. 6.

### Negative Electrode

The negative electrode 20 for a rechargeable lithium battery may include a current collector COL2 and a negative electrode active material layer AML2 on the current collector COL2. The negative electrode active material layer AML2 may include a negative electrode active material and may further include a binder and/or a conductive material (e.g., an electrically conductive material).

The negative electrode active material layer AML2 may include about 90 wt% to about 99 wt% of the negative electrode active material, about 0.5 wt% to about 5 wt% of the binder, and about 0 wt% to about 5 wt% of the conductive material.

The binder may serve to attach the negative electrode active material particles to each other and also to attach the negative electrode active material to the current collector COL2. The binder may include a non-aqueous binder, an aqueous binder, a dry binder, or a combination thereof. The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof. The aqueous binder may be selected from a styrene-butadiene rubber, a (meth)acrylated styrene-butadiene rubber, a (meth)acrylonitrile-butadiene rubber, a (meth)acrylic rubber, a butyl rubber, a fluoro rubber, polyethylene oxide, polyvinyl pyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

When an aqueous binder is used as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include Na, K, or Li.

The dry binder may be a polymer material that is capable of being fibrous. For example, the dry binder may be polytetrafluoroethylene, polyvinylidene fluoride, a polyvinylidene fluoride-hexafluoropropylene copolymer, polyethylene oxide, or a combination thereof.

The conductive material may be used to impart electrical conductivity to the electrode. Any material that does not cause chemical change (e.g., does not cause an undesirable chemical change in the rechargeable lithium battery) and conducts electrons may be used in the battery. Non-limiting examples of conductive materials include a carbon-based material such as natural graphite, artificial graphite, carbon black, acetylene black, ketjen black, a carbon fiber, a carbon nanofiber, and a carbon nanotube; a metal-based material including copper, nickel, aluminium, silver, etc. in a form of a metal powder or a metal fiber; a conductive polymer such as a polyphenylene derivative; or a mixture thereof.

The current collector COL2 may include a copper foil, a nickel foil, a stainless steel foil, a titanium foil, a nickel foam, a copper foam, a polymer substrate coated with a conductive metal, or a combination thereof.

### Negative Electrode Active Material

The negative electrode active material in the negative electrode active material layer AML2 may include a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material such as crystalline carbon, amorphous carbon, or a combination thereof. Examples of the crystalline carbon are graphite such as irregular, planar, flaky, spherical, or fibrous natural graphite or artificial graphite, and examples of the amorphous carbon are soft carbon (low-temperature fired carbon), hard carbon, mesophase pitch carbide, fired cokes, and the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, SiOx (0 < x < 2), a Si-Q alloy, or a combination thereof. In the Si-Q alloy, Q is selected from an alkali metal, an alkaline-earth metal, a Group 13 element, a Group 14 element (excluding Si), a Group 15 element, a Group 16 element, a transition metal, a rare earth element, or a combination thereof. The Sn-based negative electrode active material may include Sn, SnO₂, a Sn-based alloy, or a combination thereof.

The silicon-carbon composite may be a composite of silicon and amorphous carbon. According to an embodiment, the silicon-carbon composite may be in a form of silicon particles and amorphous carbon coated on the surface of the silicon particles. For example, the silicon-carbon composite may include secondary particles (core) in each of which primary silicon particles are assembled, and an amorphous carbon coating layer (shell) on the surfaces of the secondary particles. The amorphous carbon may also be between the primary silicon particles. And the primary silicon particles may be coated with the amorphous carbon. The secondary particles may be dispersed in an amorphous carbon matrix.

The silicon-carbon composite may further include crystalline carbon. The silicon-carbon composite may include, for example, cores including crystalline carbon and silicon particles and an amorphous carbon coating layer on a surfaces of the cores.

The Si-based negative electrode active material or the Sn-based negative electrode active material may be used in combination with a carbon-based negative electrode active material.

### Separator

Depending on the type of the rechargeable lithium battery, the separator 30 may be present between the positive electrode 10 and the negative electrode 20. The separator 30 may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, or the like.

The separator 30 may include a porous substrate and a coating layer including an organic material, an inorganic material, or a combination of organic and inorganic materials on one or both surfaces of the porous substrate.

The porous substrate may be a polymer film formed of any one selected from polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON^{®}, and polytetrafluoroethylene, or a copolymer or mixture of two or more thereof.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof. But the present disclosure is not limited to such examples.

The organic material and the inorganic material may be mixed in one coating layer, or a coating layer including an organic material and a coating layer including an inorganic material may be stacked.

### Electrolyte Solution

The electrolyte solution ELL for a rechargeable lithium battery may include a non-aqueous organic solvent and a lithium salt.

The non-aqueous organic solvent may serve as a medium for transmitting ions taking part in the electrochemical reaction of a battery. The non-aqueous organic solvent may be a carbonate-based, ester-based, ether-based, ketone-based, or alcohol-based solvent, an aprotic solvent, or a combination thereof.

The carbonate-based solvent may include one or more of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include methyl acetate, ethyl acetate, n-propyl acetate, dimethyl acetate, methyl propionate, ethyl propionate, decanolide, mevalonolactone, valerolactone, caprolactone, and the like.

The ether-based solvent may include dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like and the aprotic solvent may include nitriles such as R-CN (wherein R is a C2 to C20 linear, branched, or cyclic hydrocarbon group, a double bond, an aromatic ring, or an ether bond), and the like; amides such as dimethylformamide; dioxolanes such as 1,3-dioxolane, 1,4-dioxolane, and the like; sulfolanes, and the like.

The non-aqueous organic solvents may be used alone or in combination of two or more.

In addition, when using a carbonate-based solvent, a cyclic carbonate and a chain carbonate may be mixed and used. The cyclic carbonate and the chain carbonate may be mixed in a volume ratio of about 1: 1 to about 1:9.

The lithium salt dissolved in the organic solvent supplies lithium ions to a battery, enables a basic operation of a rechargeable lithium battery, and improves transportation of the lithium ions between the positive and negative electrodes. Examples of the lithium salt include at least one of LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethanesulfonate, lithium difluorobis(oxalato)phosphate (LiDFBOP), and lithium bis(oxalato)borate (LiBOB).

### Rechargeable Lithium Battery

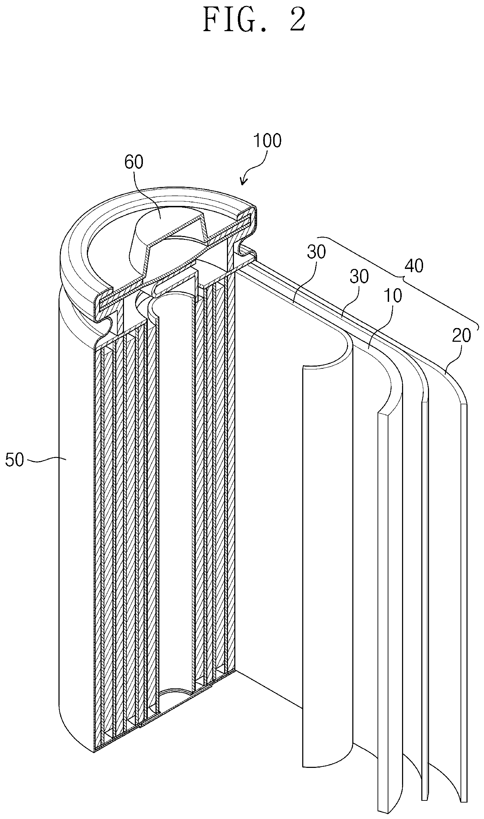

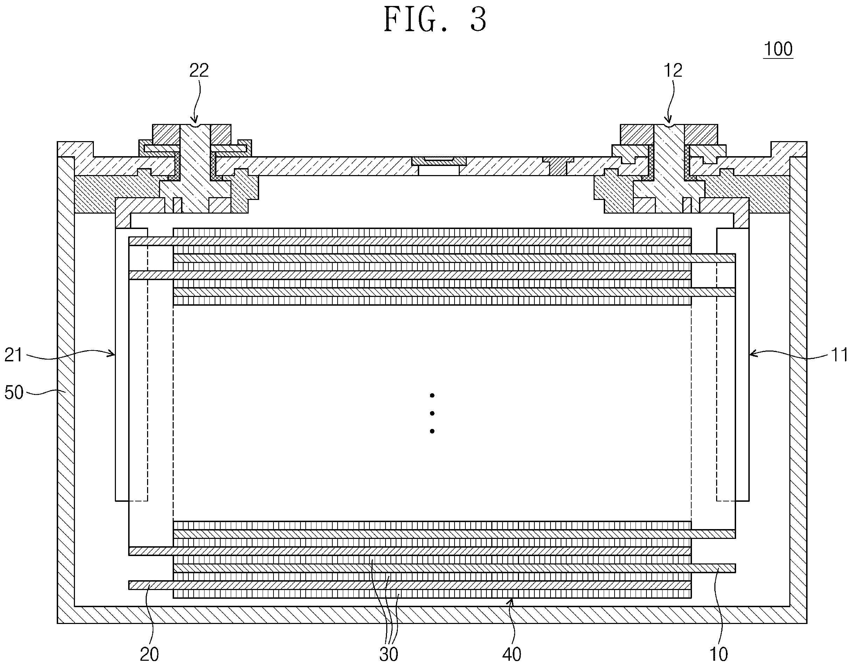

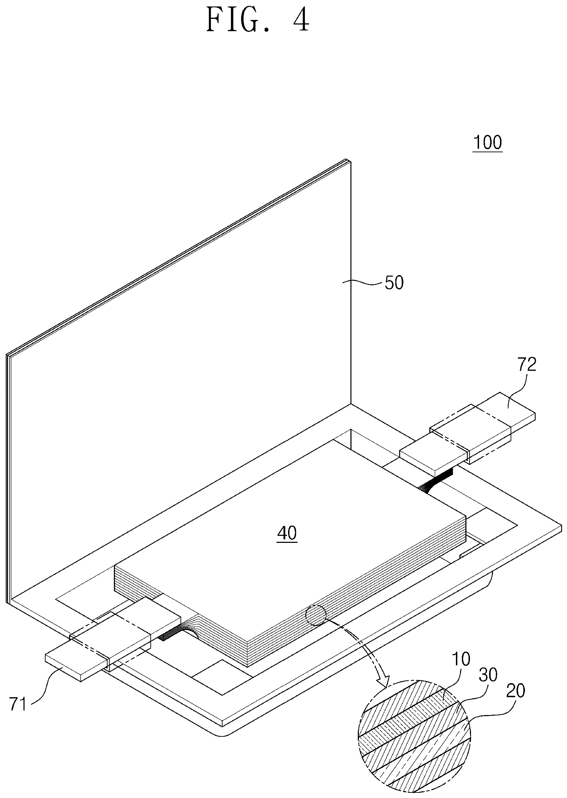

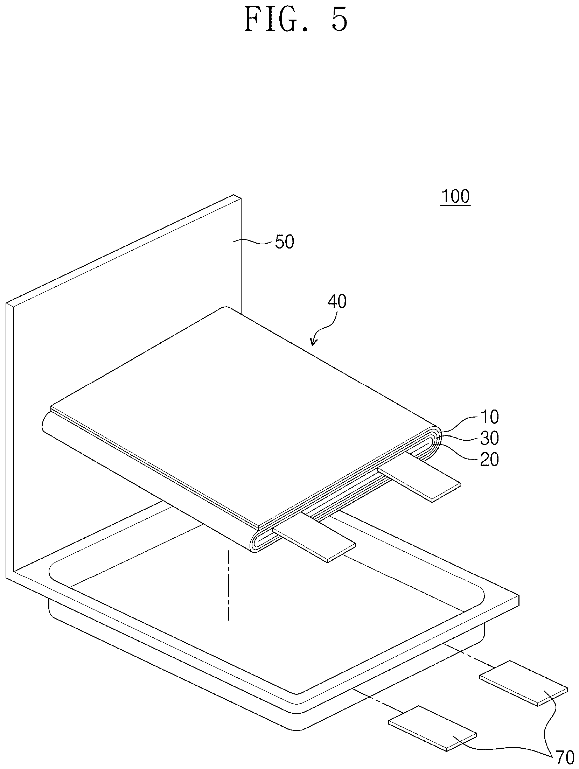

A rechargeable lithium battery may be classified into cylindrical, prismatic, pouch, or coin-type batteries, and the like depending on its shape. FIGS. 2 to 5 are schematic views illustrating rechargeable lithium batteries according to embodiments. FIG. 2 shows a cylindrical battery, FIG. 3 shows a prismatic battery, and FIGS. 4 and 5 show pouch-type batteries. Referring to FIGS. 2 to 5, the rechargeable lithium battery 100 may include an electrode assembly 40 including a separator 30 between a positive electrode 10 and a negative electrode 20, and a case 50 in which the electrode assembly 40 is accommodated. The positive electrode 10, the negative electrode 20, and the separator 30 may be impregnated with an electrolyte solution (not shown). The rechargeable lithium battery 100 may include a sealing member 60 sealing the case 50, as shown in FIG. 2. In FIG. 3, the rechargeable lithium battery 100 may include a positive lead tab 11, a positive terminal 12, a negative lead tab 21, and a negative terminal 22. As shown in FIGS. 4 and 5, the rechargeable lithium battery 100 may include an electrode tab 70, which may be, for example, a positive electrode tab 71 and a negative electrode tab 72 serving as an electrical path for inducing the current formed in the electrode assembly 40 to outside of the battery.

The rechargeable lithium battery according to embodiments may be used automobiles, mobile phones, and/or various types of electric devices, as non-limiting examples.

FIG. 6 is a cross-sectional view showing a positive electrode for a rechargeable lithium battery according to embodiments of the present disclosure. Referring to FIG. 6, as described above, the positive electrode 10 includes a current collector COL1 and a positive electrode active material layer AML1. The positive electrode active material layer AML1 is provided on the current collector COL1.

The positive electrode active material layer AML1 includes positive electrode active material particles PTC1, PTC2, and PTC3, which will be described below. The positive electrode active material layer AML1 may contain about 90 wt% to about 99 wt% of the positive electrode active material particles PTC1, PTC2, and PTC3 with respect to 100 wt% of the positive electrode active material layer AML1.

The positive electrode active material layer AML1 includes binders BND1 and BND2 and conductive materials CDM1 and CDM2, which will be described below. The positive electrode active material layer AML1 may contain about 1.0 wt% to about 10 wt% of each of the binders BND1 and BND2 and the conductive materials CDM1 and CDM2 with respect to 100 wt% of the positive electrode active material layer AML1.

The positive electrode active material layer AML1 includes a first active material layer ATL1 and a second active material layer ATL2. The positive electrode active material layer AML1 that provides the first active material layer ATL1 and the second active material layer ATL2, may contain a nano-sized olivine-based compound in large quantities and increase binding force with respect to a current collector, thereby facilitating preparation of an electrode plate and reducing resistance of an electrode plate. In addition, a rechargeable lithium battery having excellent performance may be provided when it includes the positive electrode active material layer AML1.

The first active material layer ATL1 may have a thickness T1. In embodiments, T1 may increase with an increase in weight of the first particles PTC1 and/or the second particles PTC2 included in the first active material layer ATL1. The second active material layer ATL2 may have a thickness T2. In embodiments, T2 may increase with a rise in weight of the third particles PTC3 included in the second active material layer ATL2.

A thickness ratio T1:T2 of the first active material layer ATL1 and the second active material layer ATL2 may be about 3:7 to about 7:3. For example, the thickness ratio T1:T2 of the first active material layer ATL1 and the second active material layer ATL2 may be about 5:5. When the thickness ratio T1:T2 of the first active material layer ATL1 and the second active material layer ATL2 satisfies these ranges, the positive electrode active material layer AML1 has improved binding force with respect to the current collector COL1, and may thus facilitate preparation of an electrode plate and reduce resistance of an electrode plate. In addition, a rechargeable lithium battery having excellent performance may be provided when including the first active material layer ATL1 and the second active material layer ATL2.

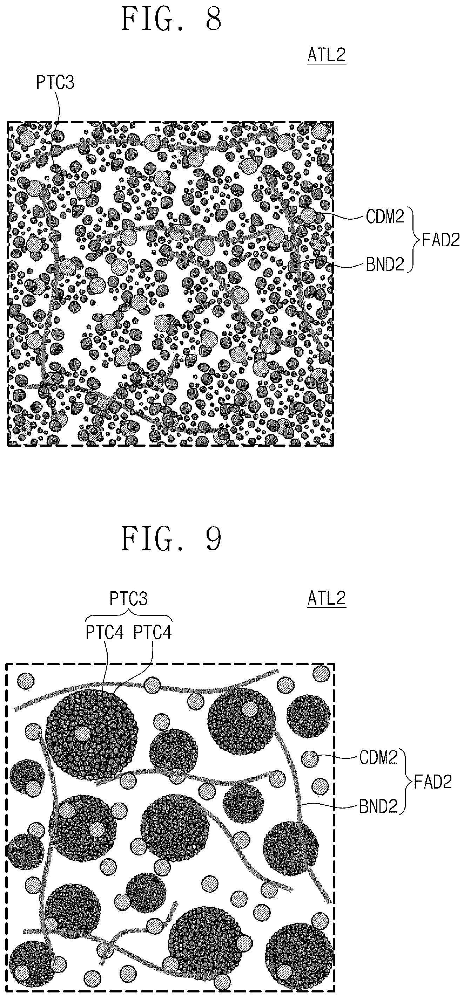

FIG. 7 is an enlarged view showing the first active material layer ATL1 according to embodiments of the present disclosure. FIG. 8 is an enlarged view showing the second active material layer ATL2 according to an embodiment of the present disclosure. FIG. 9 is an enlarged view showing the second active material layer ATL2 according to another embodiment of the present disclosure.

Referring to FIG. 7, the first active material layer ATL1 includes first particles PTC1, second particles PTC2, and a first functional additive FAD1. The first functional additive FAD1 includes a first binder BND1 and a first conductive material CDM1.

The first active material layer ATL1 includes the second particles PTC2 and may thus reduce the content of the first functional additive FAD1. For example, a weight ratio of the first functional additive FAD1 in the first positive electrode active material layer ATL1 may be about 0.024 to about 0.06 (e.g. about 2.4 parts by weight to about 6.0 parts by weight with respect to 100 parts by weight of the first active material layer ATL1)). The weight ratio of the first functional additive FAD1 in the first active material layer ATL1 may be defined as a weight of the first functional additive FAD1 with respect to a total weight of the first active material layer ATL1.

The amount of the first binder BND1 may be about 1.2 parts by weight to about 3 parts by weight with respect to 100 parts by weight of the first active material layer ATL1. The amount of the first conductive material CDM1 may be about 1.2 parts by weight to about 3 parts by weight with respect to 100 parts by weight of the first active material layer ATL1.

Referring to FIGS. 8 and 9, the second active material layer ATL2 includes third particles PTC3 and a second functional additive FAD2. The second functional additive FAD2 may include a second binder BND2 and a second conductive material CDM2. The weight ratio of the second functional additive FAD2 in the second active material layer ATL2 may be equal to or greater than the weight ratio of the first functional additive FAD1 in the first active material layer ATL1.

A ratio of the weight ratio of the second functional additive FAD2 to the weight ratio of the first functional additive FAD1 (weight ratio of the second functional additive/weight ratio of the first functional additive) may be about 1 to about 4.5. For example, a ratio of the weight of the second functional additive FAD2 to the weight of the first functional additive FAD1 may be about 1.5 to about 4.5 or about 1.66 to about 4.32. When the ratio of the weight ratio of the second functional additive FAD2 to the weight ratio of the first functional additive FAD1 is in these ranges, the positive electrode active material layer AML1 has improved binding force with respect to the current collector COL1, and may thus facilitate preparation of an electrode plate and reduce resistance of an electrode plate. In addition, a rechargeable lithium battery having excellent performance may be provided with the positive electrode active material layer AML1.

A weight ratio of the second functional additive FAD2 in the second positive electrode active material layer ATL2 may be about 0.024 to about 0.1 (e.g. about 2.4 parts by weight to about 10.0 parts by weight with respect to 100 parts by weight of the second active material layer ATL2). The weight ratio of the second functional additive FAD2 in the second active material layer ATL2 may be defined as a weight of the second functional additive FAD2 with respect to a total weight of the second active material layer.

The amount of the second binder BND2 may be equal to or greater than the amount of the first binder BND1. For example, the amount of the second binder BND2 may be about 1.2 parts by weight to about 5 parts by weight with respect to 100 parts by weight of the second active material layer ATL2.

The amount of the second conductive material CDM2 may be equal to or greater than the amount of the first conductive material CDM1. For example, the amount of the second conductive material CDM2 may be about 1.2 parts by weight to about 5 parts by weight with respect to 100 parts by weight of the second active material layer ATL2.

The binders BND1 and BND2 serve to attach the positive electrode active material particles PTC1, PTC2, and PTC3 to one another and also to attach the positive electrode active materials PTC1 and PTC2 to the current collector COL1. Examples of the binders BND1 and BND2 include polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinyl pyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon. But embodiments of the present disclosure are not limited to these examples.

The conductive materials CDM1 and CDM2 may be used to impart electrical conductivity to the electrode. Any material that does not cause chemical change (e.g., does not cause an undesirable chemical change in the rechargeable lithium battery) and conducts electrons may be used as a conductive material in the battery. Examples of the conductive materials CDM1 and CDM2 include a carbon-based material such as natural graphite, artificial graphite, carbon black, acetylene black, ketjen black, a carbon fiber, a carbon nanofiber, and a carbon nanotube; a metal-based material including copper, nickel, aluminium, silver, etc. in a form of a metal powder or a metal fiber; a conductive polymer such as a polyphenylene derivative; or a mixture thereof.

Hereinafter, the first particles PTC1, the second particles PTC2, and the third particles PTC3 will be described in detail.

### First Particles

Referring to FIG. 7, the first particles PTC1 are in the form of single particles. Herein, single particles may indicate a single type of particles having no grain boundary inside thereof. A single particle may indicate one single particle morphologically present in an independent phase in which particles are not aggregated with one another, a particle having a monolith structure, a particle having a one-body structure, or a non-aggregated particle. For example, a single particle may be a single crystal. Alternatively, the single particles may be particles containing several crystals. The single particles may be in an isolated form. Alternatively, the single particle may be in the form in which about 2 to about 100 single particles are attached to one another. That is, the first particles PTC1 may be provided in various sizes. For example, the first particles PTC1 may have an average diameter of about 1 µm. The first particles PTC1 may have a minimum diameter of about 20 nm to about 500 nm, or about 200 nm to about 300 nm. The minimum diameter indicates a diameter measured by randomly selecting about 30 primary particles (hereinafter, first primary particles) from an electron micrograph of a positive electrode active material. The first particles PTC1 may have an average diameter (D50) of about 100 nm to about 2 µm or about 500 nm to about 2 µm. For example, the first particle PTC1 may have an average diameter of about 1 µm. In an embodiment, the average diameter may be measured through a particle size analyzer. The average diameter may indicate a particle diameter when a cumulative volume is about 50 vol% in particle size distribution.

The first particles PTC1 include an olivine structured compound of Formula 1:

Liₐ₁Mnₓ₁Fe_{y1}B1_{z1}PO_{4-b1}

In Formula 1, 0.8≤a1≤1.2, 0.4≤x1≤0.8, 0≤y1≤0.6 (e.g. 0.2≤y1≤0.6), 0≤z1≤0.05, 0≤b1≤0.05, and x1 + y1 + z1 = 1 are satisfied. For example, z1 may be 0.002. B1 may be a dopant with which the first particles PTC1 are doped. B1 includes at least one of Al, Ti, V, and Mg. B1 may cause the first primary particles to be uniform in size. Thus, rechargeable lithium batteries may have improved charging/discharging efficiency, low-temperature properties, and lifetime characteristics.

In embodiments, the first particles PTC1 may include coating layers on their surfaces. The coating layers may entirely cover the surfaces of the first particles PTC1 or may partially cover the surfaces of the first particles PTC1. The coating layers may include carbon and/or a carbon-containing compound. By providing the coating layers, the first particles PTC1 may have improved structural stability and electrical conductivity.

The coating layers may further include at least one of a titanium-containing compound, a magnesium-containing compound, and a vanadium-containing compound. In particular embodiments, the coating layers may include metal-containing compounds, such as titanium-containing compounds, magnesium-containing compounds, and vanadium-containing compounds that are metal oxides, metal hydroxides, metal carbonates, composites thereof, or mixtures thereof. The metal-containing compounds may further include other metals or non-metallic elements. For example, the metal-containing compounds may include lithium.

The first particles PTC1 may further include carbon derived from the coating layers described above. The amount of carbon in the first particles PTC1 may be about 0.5 wt% to about 10 wt%, about 1 wt% to about 3 wt%, or about 1.5 wt% to about 2.5 wt%.

The first particles PTC1 may have a large Brunauer-Emmett-Teller (BET) specific surface area. For example, the first particles PTC1 may have a BET specific surface area of about 10 m²/g to about 30 m²/g. As another example, the first particles PTC1 may have a BET specific surface area of about 20 m²/g.

### Second Particles

Referring to FIG. 7, the second particles PTC2 include a layered lithium compound represented by Formula 2:

Liₐ₂Niₓ₂Mn_{z2}Al_{c}2Y_{d2}O_{2-b2}

In Formula 2, 0.8<a2≤1.2, 0.7≤x2≤0.8, 0.2≤z2≤0.3, 0≤c2≤0.02, 0≤d2≤0.003, 0≤b2≤0.05, and x2 + z2 + c2 + d2 = 1 are satisfied. For example, c2 may be 0.004 and d2 may be 0.001. Y may be a dopant with which the second particles PTC2 are doped. Y includes at least one of Ti, Mg, Zr, Mo, and Nb.

The second particles PTC2 may have a cobalt amount of less than about 100 ppm. That is, the second particles PTC2 according to an embodiment of the present disclosure may contain almost no cobalt. The second particles PTC2 according to embodiments of the present disclosure may thereby provide for a cobalt-free positive electrode active material. In embodiments, the second particles PTC2 may have a lower amount of cobalt than aluminium. Accordingly, the first active material layer ATL1 and the second active material layer ATL2 may have a cobalt (Co) content that is less than about 100 ppm.

The second particles PTC2 may be provided as part of a layered positive electrode active material that is cobalt free, a nickel-based positive electrode active material that is cobalt free, or a nickel-manganese-based positive electrode active material that is cobalt free. As used herein, cobalt free indicates that there is no cobalt, that no cobalt is used, or that only a very small amount of cobalt is included.

In embodiments, the second particles PTC2 may include a coating layer on surfaces thereof. The coating layers may entirely cover the surfaces of the second particles PTC2 or may partially cover the surfaces of the second particles PTC2. The coating layers may include a boron-containing compound, a titanium-containing compound, an aluminium-containing compound, or a combination thereof. Metal-containing compounds in the coating layer may be, for example, metal oxides, metal hydroxides, metal carbonates, composites thereof, or mixtures thereof. The compound forming the coating layer may be crystalline or amorphous. The metal-containing compounds may further include other metals or non-metallic elements. For example, the coating layer may further include lithium, manganese, and/or nickel. Surface modification using the coating layer may stabilize the structure and improve thermal stability of the positive electrode active material.

The second particles PTC2 are bigger than the first particles PTC1 (i.e. an average diameter of the second particles PTC2 is greater than the average diameter of the first particles PTC1). When the first active material layer ATL1 including the first particles PTC1 and the second particles PTC2 is introduced, the positive electrode active material layer AML1 may contain a nano-sized olivine-based compound in large quantities and have greater binding force with respect to a current collector. This, in turn, may facilitate preparation of an electrode plate and reduce resistance of the electrode plate. In addition, the electrode plate may provide for a rechargeable lithium battery having excellent performance.

The second particles PTC2 may be in the form of single particles. As discussed above, a single particle may indicate a single type of particle having no grain boundary inside thereof. A single particle may indicate one single particle morphologically present in an independent phase in which particles are not aggregated with one another, a particle having a monolith structure, a particle having a one-body structure, or a non-aggregated particle. For example, a single particle may be a single crystal or several crystals. Herein, the second particles PTC2 in the form of single particles may be referred to as a second single particles SP2. In addition, the second single particle SP2 may be referred to as small particles.

As discussed above, the average particle diameter (D50) may indicate a particle diameter when a cumulative volume is about 50 vol% in a particle size distribution. The average diameter (D50) of the second particles PTC2 may be a value measured using a particle size analyzer. The second single particles SP2 may have an average diameter (D50) of about 3 µm to about 7 µm or about 3 µm to about 4 µm. The second single particles SP2 may have a greater average diameter (D50) than the first particles PTC1 described above.

The second particles PTC2 may be in the form of polycrystals and may include secondary particles in which at least two second primary particles MMP are aggregated. That is, one second particle PTC2 may include a plurality of second primary particles MMP aggregated together. The second particles PTC2 composed of the plurality of second primary particles MMP may be in the shape of sphere or oval. Herein, the second particles PTC2 in the form of secondary particles may be referred to as a second secondary particles PC2. In addition, herein, the second secondary particles PC2 may be referred to as large particles.

The second secondary particles PC2 may have an average diameter (D50) of about 12 µm to about 18 µm. The second secondary particles PC2 have a greater average diameter (D50) than the first particles PTC1.

Herein, the second particles PTC2 may be present as second single particles SP2 or second secondary particles PC2. In addition, the second particles PTC2 may be provided as part of a positive electrode active material that includes the second single particles SP2 and the second secondary particles PC2.

Herein, both the second single particles SP2 and the second secondary particles PC2 may indicate the second particles PTC2. In addition, the second particles PTC2 may indicate one of the second single particle SP2 and the second secondary particle PC2. A case in which the second particles PTC2 are present in the form of both single particles and secondary particles, or in the form of both large particles and small particles in a positive electrode active material may be called bimodal.

The second particles PTC2 may have a small BET specific surface area. In embodiments, the second particles PTC2 may have a smaller BET specific surface area than the first particles PTC1. For example, the second particles PTC2 may have a BET specific surface area of about 0.8 m²/g to about 1.5 m²/g. As another example, the second particles PTC2 may have a BET specific surface area of about 1 m²/g. As such, a small amount of binder may be used in combination with a nano-sized olivine-based compound in embodiments of the present disclosure.

### Third Particles

Referring to FIG. 8, the third particles PTC3 may be in the form of single particles. Herein, the third particles PTC3 may be single particles per the definitions of a single particle provided above. That is, the third particles PTC3 may be provided in various sizes. For example, the third particles PTC3 may have an average diameter of about 1 µm. The third particles PTC3 may have a minimum diameter of about 20 nm to about 500 nm, or about 200 nm to about 300 nm. The minimum diameter may indicate a diameter measured by randomly selecting about 30 primary particles (hereinafter, third primary particles) from an electron micrograph of a positive electrode active material.

The third particles PTC3 may have an average diameter (D50) of about 100 nm to about 2 µm or about 500 nm to about 2 µm. For example, the third particle PTC3 may have an average diameter of about 1 µm.

The third particle PTC3 includes an olivine structured compound of Formula 3:

Liₐ₃Mnₓ₃Fe_{y3}B3_{z3}PO_{4-b3}

In Formula 3, 0.8≤a3≤1.2, 0.4≤x3≤0.8, 0≤y3≤0.6 (e.g. 0.2≤y3≤0.6), 0≤z3≤0.05, 0≤b3≤0.05, and x3 + y3 + z3 = 1 are satisfied. For example, z3 may be 0.002. B3 may be a dopant with which the third particles PTC3 are doped. B3 includes at least one of Al, Ti, V, and Mg. B3 may cause the third primary particles to be uniform in size. Thus, when provided with the third particles, rechargeable lithium batteries may have improved charging/discharging efficiency, low-temperature properties, and lifetime characteristics.

In embodiments, the third particles PTC3 may include coating layers on surfaces thereof. The coating layers may entirely cover the surfaces of the third particles PTC3 or may partially cover the surfaces of the third particles PTC3. The coating layers may include carbon and/or a carbon-containing compound. When provided with the coating layers, the third particles PTC3 may have improved structural stability and electrical conductivity.

The coating layers may further include at least one of a titanium-containing compound, a magnesium-containing compound, and a vanadium-containing compound. The titanium-containing compounds, magnesium-containing compounds, and vanadium-containing compounds may be, for example, metal oxides, metal hydroxides, metal carbonates, composites thereof, or mixtures thereof. The metal-containing compounds may further include other metals or non-metallic elements. For example, the metal-containing compounds may further include lithium.

The third particles PTC3 may further include carbon derived from the coating layers described above. The amount of carbon element in the third particles PTC3 may be about 0.5 wt% to about 10 wt%, about 1 wt% to about 3 wt%, or about 1.5 wt% to about 2.5 wt%.

When the third particles PTC3 are single particles, the weight ratio of the second functional additive FAD2 in the second active material layer ATL2 may be equal to or greater than the weight ratio of the first functional additive FAD1 in the first active material layer ATL1. Alternatively, the weight ratio of the second functional additive FAD2 in the second active material layer ATL2 may be greater than the weight ratio of the first functional additive FAD1 in the first active material layer ATL1. For example, a ratio of the weight of the second functional additive FAD2 to the weight of the first functional additive FAD1 may be about 1.5 to about 4.5.

When the third particles PTC3 are single particles, the amount of the second functional additive FAD2 may be about 4 parts by weight to about 10 parts by weight, or about 6 parts by weight, with respect to 100 parts by weight of the second active material layer ATL2. For example, the amount of the second binder BND2 may be about 2 parts by weight to about 5 parts by weight, or about 3 parts by weight, with respect to 100 parts by weight of the second active material layer. The amount of the second conductive material CDM2 may be about 2 parts by weight to about 5 parts by weight, or about 3 parts by weight, with respect to 100 parts by weight of the second active material layer. When the amount of the second functional additive FAD2 satisfies these ranges, the second active material layer ATL2 may be provided with the desired binding force.

Referring to FIG. 9, in another embodiment, the third particles PTC3 are in the form of polycrystals and may include secondary particles in which at least two primary particles are aggregated. That is, one third particle PTC3 includes a plurality of fourth particles PTC4 aggregated together. The fourth particles PTC4 may each be a primary particle. The third particles PTC3 may be in the shape of sphere or oval.

In embodiments, the third particles PTC3 may further include a grain boundary coating layer a surface of each of the fourth particles PTC4. The grain boundary coating layers may be present inside the third particles PTC3. The grain boundary coating layers may be formed along an interface between the fourth particles PTC4 inside the third particles PTC3. That is, the grain boundary coating layers may indicate a material applied onto grain boundaries inside the third particles PTC3. The grain boundary coating layers may include carbon and/or a carbon-containing compound. The grain boundary coating layers may further include at least one of a titanium-containing compound, a magnesium-containing compound, and a vanadium-containing compound.

The inside of the third particles PTC3 described above may indicate the entire inside portion of the third particles PTC3 excluding the surfaces of the third particles PTC3. For example, the inside of the third particles PTC3 may indicate a region of the entire inside from about 10 nm in depth, or from about 10 nm to about 2 µm in depth, with respect to the surfaces of the third particles PTC3.

As the third particles PTC3 may include a grain boundary coating portion, and the third particles PTC3 may thus have greater structural stability and have a uniform coating layer formed on the surfaces thereof. In addition, the third particles PTC3 may have further improved electrical conductivity because of the grain boundary coating portions.

The third particles PTC3 may further include carbon derived from the coating layers and/or the grain boundary coating layers described above. The amount of carbon element in the third particles PTC3 may be about 0.5 wt% to about 10 wt%, about 1 wt% to about 3 wt%, or about 1.5 wt% to about 2.5 wt%.

When the third particles PTC3 are secondary particles, the third particles PTC3 may have an average diameter (D50) of about 2 µm to about 15 µm, about 3 µm to about 10 µm, or about 3 µm to about 7 µm. For example, the third particles PTC3 may have an average diameter of about 5 µm. The third particle PTC3 may have a greater average diameter than the fourth particle PTC4 (which will be described later).

The fourth particles PTC4 may have an average diameter of about 200 nm or less. For example, the fourth particle PTC4 may have an average diameter of about 10 nm to about 200 nm, about 20 nm to about 200 nm, about 50 nm to about 200 nm, or about 100 nm to about 200 nm. For example, the average diameter may indicate a diameter measured by randomly selecting about 30 fourth particles PTC4 from an electron micrograph of a positive electrode active material. The fourth particles PTC4 may also have a uniform particle diameter. The fourth particles PTC4 may have smaller diameters than the third primary particles. For example, the average diameter of the fourth particles PTC4 may be about 100 nm smaller than the average diameter of the third primary particles.

When the fourth particles and the average diameters of the fourth particles satisfy the ranges described above, and the sizes of the fourth particles are uniform, and a rechargeable lithium battery containing the fourth particles may have improved charge/discharge capacity and low-temperature capacity.

The third particles PTC3 may be in the shape of sphere in which nano-sized fourth particles PTC4 are aggregated. The fourth particles PTC4 may be closely aggregated in the third particles PTC3, may thus exhibit the following characteristics. The third particles PTC3 may be in the shape of sphere or oval. The third particles PTC3 may have an average diameter (D50) of about 2 µm to about 15 µm. The third particles PTC3 may have a porosity of about 20% to about 40%. Here, the porosity (n) can be defined as pore volume (Vp) divided by total volume (Vt) of particles, or . A Span value of the third particle PTC3, analyzed through a particle size analyzer, may be about 0.3 to about 0.75.

When the third particles PTC3 are secondary particles, the weight ratio of the second functional additive FAD2 in the second active material layer ATL2 may be equal to or greater than the weight ratio of the first functional additive FAD1 in the first active material layer ATL1. For example, a ratio of the weight of the second functional additive FAD2 to the weight of the first functional additive FAD1 may be about 1 to about 4.5.

When the third particles PTC3 are secondary particles, the amount of the second functional additive FAD2 may be about 2.4 parts by weight to 6 parts by weight, or about 4 parts by weight, with respect to 100 parts by weight of the second active material layer ATL2. For example, the amount of the second binder may be about 1.2 parts by weight to about 3 parts by weight, or about 2 parts by weight, with respect to 100 parts by weight of the second active material layer. The amount of the second conductive material may be about 1.2 parts by weight to about 3 parts by weight, or about 2 parts by weight, with respect to 100 parts by weight of the second active material layer. When the amount of the second functional additive FAD2 satisfies these ranges, the second active material layer ATL2 may provide the desired binding force.

The third particles PTC3 have a greater average diameter when in the form of secondary particles than when in the form of single particles. Accordingly, the second active material layer ATL2 may have a desired binding force even when the third particles PTC3 as secondary particles contain a smaller amount of the second binder BND2 than as single particles.

Referring back to FIG. 7, the first active material layer ATL1 according to embodiments of the present disclosure includes both the first particles PTC1 and the second particles PTC2.

The first particles PTC1 is a lithium iron phosphate-based compound having an olivine structure and may be highly stable and have high chemical stability. Such compounds have excellent lifetime characteristics resulting from the stable structure as compared to other positive electrode materials. But, in some case, there may be degradation in lifetime characteristics at high voltage, leading to limited use of operating voltage. However, as the first particles PTC1 contain manganese and may improve high voltage characteristics and energy density compared as to general lithium iron phosphate-based compounds.

The first particles PTC1 may cause manganese elution. And the first particles PTC1 may have an extremely small crystal grain size. When the size of the first particles PTC1 is small, the binding force between a current collector and a positive electrode active material may be low, and accordingly, a binder may be used in larger quantities to bind the positive electrode active material and the current collector.

The second particles PTC2 may include lithium nickel manganese-based oxide that is cobalt free. The second particles PTC2 may contain substantially no cobalt but may contain nickel, manganese, and the like as a key component(s). A positive electrode active material containing the second particles PTC2 may be economical and may achieve high energy density.

A lithium nickel manganese-based oxide exhibits a higher pellet density when pressed as compared to an olivine structured compound. Thus, a lithium nickel manganese-based oxide may resolve an issue of low electrode density shown in olivine structured phosphate compounds.

As shown in FIG. 7, by mixing the first particles PTC1 and the second particles PTC2 in an appropriate ratio, an electrode plate may have improved binding force and less of the binder BND may be required. In addition, the mixing may improve capacity, density characteristics, high temperature stability, and lifetime characteristics. Further, by mixing the second particles in a bimodal form of large and small particles, density may be further improved.

With respect to a total amount of the first particles PTC1, the second particles PTC2, and the third particles PTC3 included in the first active material layer ATL1 and the second active material layer ATL2, the first particles PTC1 may amount to about 30 wt% to about 40 wt%. For example, with respect to a total amount of the first particles PTC1, the second particles PTC2, and the third particles PTC3 included in the first active material layer ATL1 and the second active material layer ATL2, the first particles PTC1 may amount to about 35 wt%. That is, a ratio of the weight of the first particles PTC1 to the total weight of the first particles PTC1, the second particles PTC2, and the third particles PTC3 (i.e., weight ratio of the first particles PTC1) may be about 0.3 to about 0.4.

With respect to a total amounts of the first particles PTC1, the second particles PTC2, and the third particles PTC3 included in the first active material layer ATL1 and the second active material layer ATL2, the second particles PTC2 may amount to about 15 wt% to about 30 wt%. For example, with respect to a total amounts of the first particles PTC1, the second particles PTC2, and the third particles PTC3 included in the first active material layer ATL1 and the second active material layer ATL2, the second particles PTC2 may amount to about 20 wt% to about 30 wt%, or about 30 wt%. That is, a ratio of the weight of the second particles PTC2 to the total weight of the first particles PTC1, the second particles PTC2, and the third particles PTC3 (i.e., weight ratio of the second particles PTC2) may be about 0.15 to about 0.3.

With respect to a total content of the first particles PTC1 and the second particles PTC2 included in the first active material layer ATL1, the second particles PTC2 may amount to about 40 wt% to about 60 wt%. For example, with respect to a total content of the first particles PTC1 and the second particles PTC2 included in the first active material layer ATL1, the second particles PTC2 may amount to about 45 wt% to about 50 wt%.

Referring back to FIGS. 8 and 9, the second active material layer ATL2 according to an embodiment of the present disclosure includes the third particles PTC3. With respect to a total amount of the first particles PTC1, the second particles PTC2, and the third particles PTC3 included in the first active material layer ATL1 and the second active material layer ATL2, the third particles PTC3 may amount to about 30 wt% to about 40 wt%. For example, with respect to a total amount of the first particles PTC1, the second particles PTC2, and the third particles PTC3 included in the first active material layer ATL1 and the second active material layer ATL2, the third particles PTC3 may amount to about 35 wt%. That is, a ratio of the weight of the second particles PTC2 to the total weight of the first particles PTC1, the second particles PTC2, and the third particles PTC3 (i.e., weight ratio of the third particles PTC3) may be about 0.3 to about 0.4.

When the amounts of the first particles PTC1 and the second particles PTC2 satisfy the ranges described above, the positive electrode active material layer AML1 may have improved binding force with respect to the current collector COL1. Accordingly, a rechargeable lithium battery having reduced resistance may be provided. In addition, when the amounts of the first particles PTC1, the second particles PTC2, and the third particles PTC3 satisfy the ranges described above, a rechargeable lithium battery having excellent performance may be provided.

A total doping amount of manganese may be about 0.40 to about 0.60. For example, the total doping amount of manganese may be about 0.49 to about 0.50 or about 0.46 to about 0.52. The total doping amount of Mn (A+B) may be defined as the sum of a doping amount (A) of manganese contained in the first active material layer ATL1 and a doping amount (B) of manganese contained in the second active material layer ATL2. The doping amount (A) of manganese contained in the first active material layer ATL1 may be defined as the sum of a product of the manganese doping amount (x1 in Formula 1) in the first particles PTC1 and the weight ratio of the first particles PTC1, and a product of the manganese doping amount (z2 in Formula 2) in the second particles PTC2 and the weight ratio of the second particles PTC2. The doping amount (B) of manganese included in the second active material layer ATL2 may be defined as a product of the manganese doping amount (x3 in Formula 3) in the third particles PTC3 and the weight ratio of the third particles PTC3.

When the total doping amount of manganese satisfies the ranges described above, the positive electrode active material layer AML1 may have improved bindability with respect to the current collector COL1. Accordingly, a rechargeable lithium battery having reduced resistance may be provided. In addition, a rechargeable lithium battery having excellent performance may be provided.

The positive electrode for a rechargeable lithium battery according to embodiments of the present disclosure has the following effects.

A relatively large amount of the first binder BND1 may be required to attach the first particles PCT1 having a small average diameter to the current collector COL1 (see FIG. 1), whereas a relatively small amount of the first binder BND1 may be required to attach the second particles PTC2 having a small BET specific surface area and a large average diameter onto the first active material layer ATL1. The positive electrode active material layer AML1 according to an embodiment of the present disclosure includes the first particles PTC1, the second particles PTC2, and the third particles PTC3, and introduces the first active material layer ATL1 and the second active material layer ATL2. Thus, the positive electrode active material layer may include a nano-sized olivine-based compound in large quantities and increase binding force with respect to a current collector, thereby facilitating preparation of an electrode plate and reducing resistance of an electrode plate. In addition, a rechargeable lithium battery having excellent capacity and lifetime characteristics along with high operating voltage and energy density may be provided.

Hereinafter, the present disclosure will be described in more detail through Examples. However, Examples are only illustrations for describing the present disclosure, and the scope of the present disclosure is not limited to the Examples below.

### Preparation Example 1: Preparation of NMX Particles

Ni_{0.75}Mn_{0.23}Al_{0.02}(OH)₂ and LiOH were mixed at a molar ratio of 1:1.05 and the mixture was subjected to a primary heat treatment at 900 °C for 8 hours in an oxygen atmosphere to obtain an oxide having a composition of Li_{1.05}Ni_{0.75}Mn_{0.23}Al_{0.02}O₂ and an average diameter (D50) of about 4 µm.Aluminium oxide was added to the oxide and then the mixture was subjected to a secondary heat treatment at 825 °C for 8 hours in an oxygen atmosphere to prepare NMX particles. The NMX particles were represented by the formula LiNi_{0.75}Mn_{0.23}Al_{0.02}O₂.

### Preparation Example 2: Preparation of LMFP Particle in the form of Single Particles

A manganese iron phosphate precursor (Mn_{0.6}Fe_{0.4}PO₄), lithium carbonate, magnesium dioxide, and titanium dioxide were added to water at a molar ratio of (Mn+Fe):Li:Mg:Ti of 1:1.03:0.01:0.004. 10 wt% of glucose was further added to the mixture. The mixture was subjected to a wet grinding process through ball milling. The mixture was evaporated to dryness on a heating tray and then placed and dried in a vacuum oven at 85 °C for 4 hours. The dried mixture was fired at 650 °C for 10 hours in a nitrogen atmosphere. The fired product was ground at a rotation speed of 8000 rpm to obtain LMFP particles in the form of a single particles. The LMFP particles in the form of a single particles were by Formula approximately LiMn_{0.6}Fe_{0.4}PO₄.

### Preparation Example 3: Preparation of LMFP Particle in the form of Secondary Particles

A manganese iron phosphate precursor (Mn_{0.6}Fe_{0.4}PO₄), lithium carbonate, magnesium dioxide, and titanium dioxide were added to water at a molar ratio of (Mn+Fe):Li:Mg:Ti of 1:1.03:0.01:0.004. 10 wt% of glucose was further added to the mixture. The slurry mixture was spray-dried and evaporated to dryness at a spray pressure of 0.5 MPa and a temperature of 230 °C. The dried mixture was fired at 750 °C for 10 hours in a nitrogen atmosphere to obtain an LMFP particles in the form of secondary particles. The LMFP particles in the form of secondary particles were approximately represented by the Formula approximately LiMn_{0.6}Fe_{0.4}PO₄.

### Example 1: Preparation of Positive Electrode including First Active Material Layer and Second Active Material Layer

The NMX particles, the LMFP particles in the form of single particles, a first binder (polyvinylidene fluoride), and a first conductive material (carbon black) were dispersed in N-methylpyrrolidone at a weight ratio of 0.96:0.02:0.02 to prepare a first active material slurry.

The LMFP particles in the form of single particles, a second binder (polyvinylidene fluoride), and a second conductive material (carbon black) were dispersed in N-methylpyrrolidone at a weight ratio of 0.94:0.03:0.03 to prepare a second active material slurry.

The first active material slurry was applied onto a 15 µm thick aluminium thin film, which is a current collector, and dried to form a first active material layer. The second active material slurry was applied onto the first active material layer and dried to form a second active material layer. The first active material layer and the second active material layer were formed such that the NMX particles, the LMFP particles in the form of single particles in the first active material layer, and the LMFP particles in the form of single particles in the second active material layer were provided at a weight ratio of 30:35:35. Through a roll press, a positive electrode in which the aluminium current collector, the first active material layer, and the second active material layer were stacked in this order was prepared. A thickness ratio of the first active material layer and the second active material layer was 5:5.

### Example 2: Preparation of Positive Electrode including First Active Material Layer and Second Active Material Layer

A positive electrode was prepared in the same manner as in Example 1, except that the LMFP particles in the form of secondary particles, the second binder (polyvinylidene fluoride), and the second conductive material (carbon black) were dispersed in N-methylpyrrolidone at a weight ratio of 0.96:0.02:0.02 to prepare a second active material slurry. A thickness ratio of the first active material layer and the second active material layer was 5:5.

### Comparative Example 1: Preparation of Positive Electrode including First Active Material Layer

A positive electrode including a first active material layer containing only NMX particles was prepared.

The NMX particles, the first binder (polyvinylidene fluoride), and the first conductive material (carbon black) were dispersed in N-methylpyrrolidone at a weight ratio of 0.976:0.012:0.012 to prepare a first active material slurry. The first active material slurry was applied onto a 15 µm thick aluminium thin film, which is a current collector, and dried to form a first active material layer. Through a roll press, a positive electrode in which the aluminium current collector and the first active material layer were stacked in this order was prepared.

### Comparative Example 2: Preparation of Positive Electrode including First Active Material Layer

A positive electrode including a first active material layer containing only LMFP particles was prepared.

A positive electrode was prepared in the same manner as in Comparative Example 1, except that the LMFP particles in the form of single particles, the first binder (polyvinylidene fluoride), and the first conductive material (carbon black) were dispersed in N-methylpyrrolidone at a weight ratio of 0.94:0.03:0.03 to prepare a first active material slurry.

### Comparative Example 3: Preparation of Positive Electrode including First Active Material Layer

A positive electrode including only a first active material layer containing LMFP particles in the form of a secondary particles was prepared.

A positive electrode was prepared in the same manner as in Comparative Example 1, except that the LMFP particles in the form of secondary particles, the first binder (polyvinylidene fluoride), and the first conductive material (carbon black) were dispersed in N-methylpyrrolidone at a weight ratio of 0.976:0.012:0.012 to **prepare a** first active material slurry.

### Comparative Example 4: Preparation of Positive Electrode including First Active Material Layer

A positive electrode including only a first active material layer having the NMX particles and the LMFP particles in the form of single particles at a weight ratio of 70:30 was prepared.

A positive electrode was prepared in the same manner as in Comparative Example 1, except that the NMX particles, the LMFP particles in the form of single particles, the first binder (polyvinylidene fluoride), and the first conductive material (carbon black) were dispersed in N-methylpyrrolidone at a weight ratio of 0.672:0.28:0.02:0.02 to prepare a first active material slurry.

### Comparative Example 5: Preparation of Positive Electrode including First Active Material Layer

A positive electrode including only a first active material layer having the NMX particles and the LMFP particles in the form of single particles at a weight ratio of 60:40 was prepared.

A positive electrode was prepared in the same manner as in Comparative Example 1, except that the NMX particles, the LMFP particles in the form of single particles, the first binder (polyvinylidene fluoride), and the first conductive material (carbon black) were dispersed in N-methylpyrrolidone at a weight ratio of 0.576:0.384:0.02:0.02 to prepare a first active material slurry.

### Comparative Example 6: Preparation of Positive Electrode including First Active Material Layer

A positive electrode including only a first active material layer having the NMX particles and the LMFP particles in the form of single particles at a weight ratio of 50:50 was prepared.

A positive electrode was prepared in the same manner as in Comparative Example 1, except that the NMX particles, the LMFP particles in the form of single particles, the first binder (polyvinylidene fluoride), and the first conductive material (carbon black) were dispersed in N-methylpyrrolidone at a weight ratio of 0.48:0.48:0.02:0.02 to prepare a first active material slurry.

### Comparative Example 7: Preparation of Positive Electrode including First Active Material Layer

A positive electrode including only a first active material layer having the NMX particles and the LMFP particles in the form of single particles at a weight ratio of 40:60 was prepared.

A positive electrode was prepared in the same manner as in Comparative Example 1, except that the NMX particles, the LMFP particles in the form of single particles, the first binder (polyvinylidene fluoride), and the first conductive material (carbon black) were dispersed in N-methylpyrrolidone at a weight ratio of 0.384:0.576:0.02:0.02 to prepare a first active material slurry.

### Comparative Example 8: Preparation of Positive Electrode including First Active Material Layer

A positive electrode including only a first active material layer having the NMX particles and the LMFP particles in the form of single particles at a weight ratio of 30:70 was prepared.

A positive electrode was prepared in the same manner as in Comparative Example 1, except that the NMX particles, the LMFP particles in the form of single particles, the first binder (polyvinylidene fluoride), and the first conductive material (carbon black) were dispersed in N-methylpyrrolidone at a weight ratio of 0.288:0.672:0.02:0.02 to prepare a first active material slurry.

### Comparative Example 9: Preparation of Positive Electrode including First Active Material Layer

A positive electrode including only a first active material layer having the NMX particles and the LMFP particles in the form of single particles at a weight ratio of 20:80 was prepared.

A positive electrode was prepared in the same manner as in Comparative Example 1, except that the NMX particles, the LMFP particles in the form of single particles, the first binder (polyvinylidene fluoride), and the first conductive material (carbon black) were dispersed in N-methylpyrrolidone at a weight ratio of 0.192:0.768:0.02:0.02 to prepare a first active material slurry.

### Comparative Example 10: Preparation of Positive Electrode including First Active Material Layer

A positive electrode including only a first active material layer having the NMX particles and the LMFP particles in the form of single particles at a weight ratio of 10:90 was prepared.

A positive electrode was prepared in the same manner as in Comparative Example 1, except that the NMX particles, the LMFP particles in the form of single particles, the first binder (polyvinylidene fluoride), and the first conductive material (carbon black) were dispersed in N-methylpyrrolidone at a weight ratio of 0.096:0.864:0.02:0.02 to prepare a first active material slurry.

### Comparative Example 11: Preparation of Positive Electrode including First Active Material Layer

A positive electrode including only a first active material layer having the NMX particles, the LMFP particles in the form of single particles, and the LMFP particles in the form of secondary particles at a weight ratio of 30:35:35 was prepared.

A positive electrode was prepared in the same manner as in Comparative Example 1, except that the NMX particles, the LMFP particles in the form of single particles, the LMFP particles in the form of secondary particles, the first binder (polyvinylidene fluoride), and the first conductive material (carbon black) were dispersed in N-methylpyrrolidone at a weight ratio of 0.3:0.33:0.33:0.02:0.02 to prepare a first active material slurry.

### Reference Example 1: Preparation of Positive Electrode including First Active Material Layer and Second Active Material Layer

A positive electrode with FAD2/FAD1=0.67 was prepared.

A positive electrode was prepared in the same manner as in Example 2, except that the NMX particles, the LMFP particles in the form of single particles, the first binder (polyvinylidene fluoride), and the first conductive material (carbon black) were dispersed in N-methylpyrrolidone at a weight ratio of 0.94:0.03:0.03 to prepare a first active material slurry, and the LMFP particles in the form of secondary particles, the second binder (polyvinylidene fluoride), and the second conductive material (carbon black) were dispersed in N-methylpyrrolidone at a weight ratio of 0.96:0.02:0.02 to prepare a second active material slurry.

### Reference Example 2: Preparation of Positive Electrode including First Active Material Layer and Second Active Material Layer

A positive electrode with FAD2/FAD1=5.00 was prepared.

A positive electrode was prepared in the same manner as in Example 2, except that the NMX particles, the LMFP particles in the form of single particles, the first binder (polyvinylidene fluoride), and the first conductive material (carbon black) were dispersed in N-methylpyrrolidone at a weight ratio of 0.976:0.012:0.012 to prepare a first active material slurry, and the LMFP particles in the form of secondary particles, the second binder (polyvinylidene fluoride), and the second conductive material (carbon black) were dispersed in N-methylpyrrolidone at a weight ratio of 0.88:0.06:0.06 to prepare a second active material slurry.

### Preparation of Rechargeable Lithium Battery

A 2032 type coin half-cell was prepared using the prepared positive electrode and a lithium metal counter electrode as a counter electrode. A separator with a thickness of about 16 µm and formed from a porous polyethylene (PE) film was placed between the positive electrode and the lithium metal counter electrode, and an electrolyte solution was injected to prepare a rechargeable lithium battery. As an electrolyte, an electrolyte solution obtained by mixing 1.3 M LiPF₆ with a mixed solvent containing ethylene carbonate (EC), ethylmethyl carbonate (EMC), and dimethyl carbonate (DMC) in a volume ratio of 3:4:3 was used.

Tables 1 and 2 summarize the Examples 1 and 2, Reference Examples 1 and 2, and the Comparative Examples 1-11.

**Table 1**

| Item | | | Weight ratio of particle | | |
|---|---|---|---|---|---|
| | Electrode plate structure | Mn doping content when mixed | NMX particles | LMFP particles in the form of single particles | LMFP particles in the form of secondary particles |
| Example 1 | Double layer | 0.49 | 30 | 70 | - |
| Example 2 | Double layer | 0.49 | 30 | 35 | 35 |
| Comparative Example 1 | Single layer | - | 100 | - | - |
| Comparative Example 2 | Single layer | - | - | 100 | - |
| Comparative Example 3 | Single layer | - | - | - | 100 |
| Comparative Example 4 | Single layer | 0.34 | 70 | 30 | - |
| Comparative Example 5 | Single layer | 0.38 | 60 | 40 | - |
| Comparative Example 6 | Single layer | 0.42 | 50 | 50 | - |
| Comparative Example 7 | Single layer | 0.45 | 40 | 60 | - |
| Comparative Example 8 | Single layer | 0.49 | 30 | 70 | - |
| Comparative Example 9 | Single layer | 0.53 | 20 | 80 | - |
| Comparative Example 10 | Single layer | 0.56 | 10 | 90 | - |
| Comparative Example 11 | Single layer | 0.49 | 30 | 35 | 35 |
| Reference Example 1 | Double layer | 0.49 | 30 | 35 | 35 |
| Reference Example 2 | Double layer | 0.49 | 30 | 35 | 35 |

**Table 2**

| Item | Content of first functional additive FAD1 in first active material layer (parts by weight/100 parts by weight of first active material layer) | | Content of second functional additive FAD2 in second active material layer (Parts by weight/100 parts by weight of second active material layer) | | Weight ratio of FAD2/FAD1 |
|---|---|---|---|---|---|
| | First binder | First conductive material | Second binder | Second conductive material | |
| Example 1 | 0.02 | 0.02 | 0.03 | 0.03 | 1.5 |
| Example 2 | 0.02 | 0.02 | 0.02 | 0.02 | 1.0 |
| Comparative Example 1 | 0.012 | 0.012 | - | - | - |
| Comparative Example 2 | 0.03 | 0.03 | - | - | - |
| Comparative Example 3 | 0.012 | 0.012 | - | - | - |
| Comparative Example 4 | 0.02 | 0.02 | - | - | - |
| Comparative Example 5 | 0.02 | 0.02 | - | - | - |
| Comparative Example 6 | 0.02 | 0.02 | - | - | - |
| Comparative Example 7 | 0.02 | 0.02 | - | - | - |
| Comparative Example 8 | 0.02 | 0.02 | - | - | - |
| Comparative Example 9 | 0.02 | 0.02 | - | - | - |
| Comparative Example 10 | 0.02 | 0.02 | - | - | - |
| Comparative Example 11 | 0.02 | 0.02 | - | - | - |
| Reference Example 1 | 0.03 | 0.03 | 0.02 | 0.02 | 0.67 |
| Reference Example 2 | 0.012 | 0.012 | 0.06 | 0.06 | 5.00 |

### Evaluation Example 1: Analysis of Positive Electrode Active Material Surface

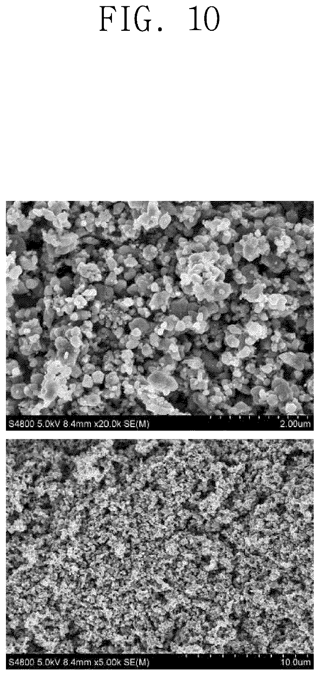

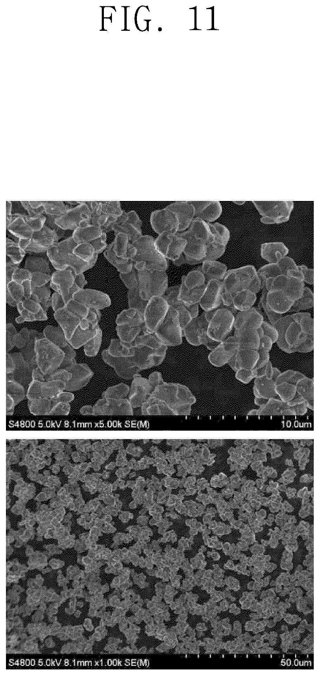

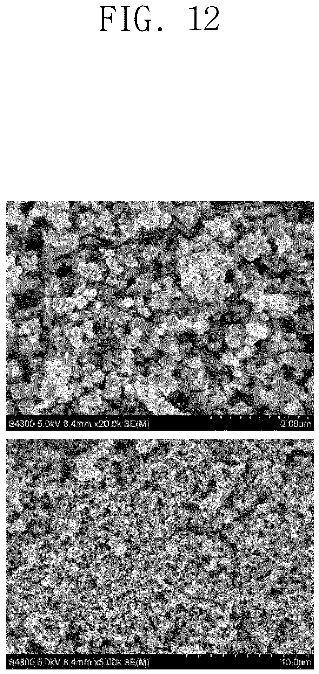

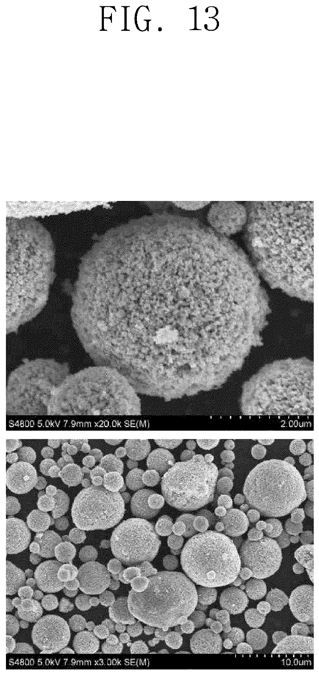

SEM images for each of the first, second, and third particles prepared in Preparation Examples 1 to 3 are shown in FIGS. 10 to 13. Referring to FIG. 10, it is seen that the first particles according to Preparation Example 2 are in the form of a nano-sized fine single particles. Referring to FIG. 11, it is seen that the second particles according to Preparation Example 1 are in the form of a micro-sized fine single particles. Referring to FIG. 12, it is seen that the third particles according to Preparation Example 2 are in the form of a nano-sized fine single particles. Referring to FIG. 13, it is seen that third particles according to Preparation Example 3 are in the form of a spherical secondary particles in which a plurality of primary particles are aggregated.

### Evaluation Example 2: Evaluation of Active Material

The pellet density (PD) of the positive electrode active materials of the Examples, Reference Examples, and the Comparative Examples was measured, and the results are shown in Table 3.

**Table 3**

| Item | Pellet density (g/cc) |
|---|---|
| Example 1 | 2.58 |
| Example 2 | 2.60 |
| Comparative Example 1 | 3.10 |
| Comparative Example 2 | 2.35 |
| Comparative Example 3 | 2.41 |
| Comparative Example 4 | 2.88 |
| Comparative Example 5 | 2.80 |
| Comparative Example 6 | 2.73 |
| Comparative Example 7 | 2.65 |
| Comparative Example 8 | 2.58 |
| Comparative Example 9 | 2.50 |
| Comparative Example 10 | 2.43 |
| Comparative Example 11 | 2.61 |
| Comparative Example 8 | 2.88 |
| Comparative Example 9 | 2.80 |
| Comparative Example 10 | 2.73 |
| Comparative Example 11 | 2.65 |
| Reference Example 1 | 2.63 |
| Reference Example 2 | 2.62 |

### Evaluation Example 3: Evaluation of Resistance and Bindability

Characteristics of rechargeable lithium batteries prepared using positive electrode active materials each from the Examples, Reference Examples, and the Comparative Examples were evaluated.

For initial charging/discharging, the rechargeable lithium batteries were initially charged at a constant current of 0.2 C and a constant voltage (4.45 V) (cut-off 0.05C) at 25 °C, and after 10 minutes of rest, discharged up to 3.0 V at a constant current of 0.2 C, thereby obtaining the initial charge capacity (charge amount at 0.2 C (mAh/g)) and the initial discharge capacity (discharge amount at 0.2 C (mAh/g)), and the efficiency at 0.2 C (%) (0.2 C efficiency(%)) is expressed as the initial discharge capacity/the initial charge capacity. The rechargeable lithium batteries were charged to SOC50 at a constant current of 0.2 C, and then rest for 1 hour at SOC50. After that, the rechargeable lithium batteries were discharged at 1.0 C for 10 seconds, followed by another 10-second rest. At this point, the difference between the voltage after the discharge and the voltage after the 10-second rest was divided by the current to calculate the cell resistance (DC-IR). The results are shown in Table 4.

**Table 4**

| Item | 0.2 C charge amount (mAh/g) | 0.2 C discharge amount (mAh/g) | 0.2 C efficiency (%) | DCIR, SOC50 (Ω, 0.2 C/1.0 C) |
|---|---|---|---|---|
| Example 1 | 177.8 | 161.7 | 90.9 | 28.6 |
| Example 2 | 178.2 | 162.3 | 91.1 | 25.6 |
| Comparative Example 1 | 230.0 | 200.0 | 87.0 | 6.5 |
| Comparative Example 2 | 155.0 | 145.0 | 93.5 | 43.0 |
| Comparative Example 3 | 156.2 | 148.1 | 94.8 | 37.2 |
| Comparative Example 4 | 207.5 | 183.5 | 88.4 | 17.5 |
| Comparative Example 5 | 200.0 | 178.0 | 89.0 | 21.1 |
| Comparative Example 6 | 192.5 | 172.5 | 89.6 | 24.8 |
| Comparative Example 7 | 185.0 | 167.0 | 90.3 | 28.4 |
| Comparative Example 8 | 177.5 | 161.5 | 91.0 | 32.1 |
| Comparative Example 9 | 170.0 | 156.0 | 91.8 | 35.7 |
| Comparative Example 10 | 162.5 | 150.5 | 92.6 | 39.4 |
| Comparative Example 11 | 177.9 | 162.6 | 91.4 | 30.0 |
| Reference Example 1 | 174.2 | 157.6 | 90.5 | 32.4 |
| Reference Example 2 | 170.1 | 150.7 | 88.6 | 38.6 |

Referring to Table 4, the rechargeable lithium batteries including the positive electrodes according to the Examples 1 and 2 have a higher discharge amount and lower resistance than the Comparative Examples 2 and 3. Accordingly, it is determined that the addition of NMX particles increases binding force of the positive electrode containing an olivine-based compound.

In addition, it can be seen that the rechargeable lithium batteries including the positive electrodes according to the Examples 1 and 2 have lower resistance than the Reference Examples 1 and 2. Accordingly, it can be seen that when the ratio of the weight ratio of the second functional additive to the weight ratio of the first functional additive satisfies the desired ranges, binding force of the positive electrode may be increased.

### Evaluation Example 4: Evaluation of Battery Properties

Characteristics of rechargeable lithium batteries prepared using positive electrode active materials each from the Examples, Reference Examples, and the Comparative Examples were evaluated.

For initial charging/discharging, the rechargeable lithium batteries were initially charged at a constant current of 0.2 C and a constant voltage (4.45 V) (cut-off 0.05C) at 25 °C, and after 10 minutes of rest, discharged up to 3.0 V at a constant current of 0.2 C, thereby obtaining the initial charge capacity and the initial discharge capacity, and then average voltage and energy density were evaluated. The average voltage was obtained by integrating an area under a discharge voltage curve (a-voltage-capacity graph) after the initial charging and discharging of the cells and then dividing the integral by discharge capacity. The energy density was obtained by using a calculation equation of {average driving voltage (V) x capacity (Ah)/cell weight (kg)}, wherein the capacity was calculated by multiplying a positive electrode weight (g) and discharge capacity (mAh/g). Thereafter, the charging/discharging was repeated 50 times and 1.0 C/1.0 C, and the lifetime at 1.0 C (1 C lifetime (%, @50ccl)) is expressed as the discharge capacity after the 50th cycle/initial discharge capacity. Coin cells were additionally prepared and then the batteries were initially charged at a constant current of 0.2 C and a constant voltage (4.45 V) (cut-off 0.05C) at 25 °C, and after 10 minutes of rest, discharged up to 3.0 V at a constant current of 0.2 C and additionally charged, and then measured at -20 °C for discharge capacity. The results of evaluating the battery properties are shown in Table 5.

**Table 5**

| Item | -20 °C capacity (mAh/g) | Average voltage | 1 C lifetime (%, @50ccl) | Energy density (Wh/kg) |
|---|---|---|---|---|
| Example 1 | 92 | 3.66 | 99.2 | 595 |
| Example 2 | 95 | 3.66 | 99.3 | 597 |
| Comparative Example 1 | 65 | 3.79 | 98.4 | 659 |
| Comparative Example 2 | 96 | 3.60 | 99.1 | 478 |
| Comparative Example 3 | 126 | 3.60 | 99.8 | 488 |
| Comparative Example 4 | 74 | 3.73 | 98.6 | 685 |
| Comparative Example 5 | 77 | 3.71 | 98.7 | 661 |
| Comparative Example 6 | 81 | 3.70 | 98.8 | 637 |
| Comparative Example 7 | 84 | 3.68 | 98.8 | 622 |
| Comparative Example 8 | 87 | 3.66 | 98.9 | 594 |
| Comparative Example 9 | 90 | 3.64 | 99.0 | 566 |
| Comparative Example 10 | 93 | 3.62 | 99.1 | 538 |
| Comparative Example 11 | 97 | 3.66 | 99.2 | 595 |
| Reference Example 1 | 85 | 3.63 | 98.3 | 572 |
| Reference Example 2 | 75 | 3.61 | 97.1 | 544 |

Referring to Table 5, it can be seen that the rechargeable lithium batteries including the positive electrodes according to Examples 1 and 2 have excellent capacity and lifetime characteristics along with high operating voltage and energy density.

A positive electrode for a rechargeable lithium battery according to embodiments of the present disclosure contains a nano-sized olivine-based compound in large quantities and increases binding force with respect to a current collector. Thus, preparation of an electrode plate may be facilitated and resistance of the electrode plate may be reduced.

A rechargeable lithium battery according to embodiments of the present disclosure may have excellent capacity and lifetime characteristics along with high operating voltage and energy density.

The Examples and Comparative Examples are provided in order to highlight characteristics of one or more embodiments, but it will be understood that the Examples and Comparative Examples are not limiting the scope of the embodiments. Further, the embodiments are not limited to the particular details described in the Examples and Comparative Examples.

## Claims

1. A positive electrode for a rechargeable lithium battery comprising:
a current collector;
a first active material layer on the current collector, the first active material layer including first particles, second particles, a first binder, and a first conductive material; and
a second active material layer on the first active material layer, the second active material layer including third particles, a second binder, and a second conductive material,
wherein the first particles are an olivine structured compound of Formula 1,
wherein the second particles are a layered compound of Formula 2,
wherein the third particles are an olivine structured compound of Formula 3,
wherein the first active material layer and the second active material layer comprise less than about 100 ppm of cobalt,
wherein the first particles are single particles,
wherein the first particles have an average diameter of about 100 nm to about 2 µm,
wherein an average diameter of the second particles is greater than the average diameter of the first particles,
wherein the third particles are single particles, and
wherein the third particle have an average diameter of about 100 nm to about 2 µm,
wherein Formula 1 is:
Liₐ₁Mnₓ₁Fe_{y1}B1_{z1}PO_{4-b1}
with 0.8≤a1≤1.2, 0.4≤x1≤0.8, 0≤y1≤0.6, 0≤z1≤0.05, 0≤b1≤0.05, and x1 + y1 + z1 = 1, and B1 includes at least one of Al, Ti, V, and Mg,
wherein Formula 2 is:
Liₐ₂Niₓ₂Mn_{z2}Al_{c}2Y_{d2}O_{2-b2}
with 0.8<a2≤1.2, 0.7≤x2≤0.8, 0.2≤z2≤0.3, 0≤c2≤0.02, 0≤d2≤0.003, 0≤b2≤0.05, and x2 + z2 + c2 + d2 = 1, and Y includes at least one of Ti, Mg, Zr, Mo, and Nb, and
wherein Formula 3 is:
Liₐ₃Mnₓ₃Fe_{y3}B3_{z3}PO_{4-b3}
with 0.8≤a3≤1.2, 0.4≤x3≤0.8, 0≤y3≤0.6, 0≤z3≤0.05, 0≤b3≤0.05, and x3 + y3 + z3 = 1, and B3 includes at least one of Al, Ti, V, and Mg.

2. The positive electrode for a rechargeable lithium battery of claim 1, wherein the first binder and the first conductive material constitute a first functional additive,
wherein the second binder and the second conductive material constitute a second functional additive, and
wherein the first functional additive in the first active material layer has a lower weight ratio than a weight ratio of the second functional additive in the second active material layer.

3. The positive electrode for a rechargeable lithium battery of claim 2, wherein a ratio of the weight ratio of the second functional additive to the weight ratio of the first functional additive is about 1.5 to about 4.5.

4. The positive electrode for a rechargeable lithium battery of any one of claims 1 to 3, wherein an amount of the first binder is about 1.2 parts by weight to about 3 parts by weight with respect to 100 parts by weight of the first active material layer, and
wherein an amount of the second binder is about 2 parts by weight to about 5 parts by weight with respect to 100 parts by weight of the second active material layer.

5. The positive electrode for a rechargeable lithium battery of any one of claims 1 to 4, wherein an amount of the first conductive material is about 1.2 parts by weight to about 3 parts by weight with respect to 100 parts by weight of the first active material layer, and
wherein an amount of the second conductive material is about 2 parts by weight to about 5 parts by weight with respect to 100 parts by weight of the second active material layer.

6. The positive electrode for a rechargeable lithium battery of any one of claims 1 to 5, wherein with respect to a total amount of the first particles, the second particles, and the third particles included in the first active material layer and the second active material layer, the amount of the second particles is about 15 wt% to about 30 wt%.

7. The positive electrode for a rechargeable lithium battery of any one of claims 1 to 6, wherein a total doping amount of manganese included in the first active material layer and the second active material layer is about 0.46 to about 0.52.

8. The positive electrode for a rechargeable lithium battery of any one of claims 1 to 7, wherein the second particles have an average diameter of about 3 µm to about 7 µm.

9. The positive electrode for a rechargeable lithium battery of any one of claims 1 to 8, wherein a BET specific surface area of the second particles is smaller than a BET specific surface area of the first particles.

10. A positive electrode for a rechargeable lithium battery comprising:
a current collector;
a first active material layer on the current collector, the first active material layer including first particles, second particles, a first binder, and a first conductive material; and
a second active material layer on the first active material layer, the second active material layer including third particles, a second binder, and a second conductive material,
wherein the first particles are an olivine structured compound of Formula 1,
wherein the second particles are a layered compound of Formula 2,
wherein the third particle are an olivine structured compound of Formula 3,
wherein the first active material layer and the second active material layer comprise less than about 100 ppm of cobalt,
wherein the first particles are single particles,
wherein the first particles have an average diameter of about 100 nm to about 2 µm,
wherein an average diameter of the second particles is greater than the average diameter of the first particles,
wherein each of the third particles include a plurality of fourth particles aggregated together,
wherein the third particles have an average diameter of about 2 µm to about 15 µm, and
wherein the fourth particles are primary particles having an average diameter of about 200 nm or less,
wherein Formula 1 is:
Liₐ₁Mnₓ₁Fe_{y1}B1_{z1}PO_{4-b1}
with 0.8≤a1≤1.2, 0.4≤x1≤0.8, 0≤y1≤0.6, 0≤z1≤0.05, 0≤b1≤0.05, and x1 + y1 + z1 = 1, and
with B1 including at least one of Al, Ti, V, and Mg,
wherein Formula 2 is:
Liₐ₂Niₓ₂Mn_{z2}Al_{c}2Y_{d2}O_{2-b2}
with 0.8<a2≤1.2, 0.7≤x2≤0.8, 0.2≤z2≤0.3, 0≤c2≤0.02, 0≤d2≤0.003, 0≤b2≤0.05, and x2 + z2 + c2 + d2 = 1, and with Y including at least one of Ti, Mg, Zr, Mo, and Nb, and
wherein Formula 3 is:
Liₐ₃Mnₓ₃Fe_{y3}B3_{z3}PO_{4-b3}
with 0.8≤a3≤1.2, 0.4≤x3≤0.8, 0≤y3≤0.6, 0≤z3≤0.05, 0≤b3≤0.05, and x3 + y3 + z3 = 1, and with B3 including at least one of Al, Ti, V, and Mg.

11. The positive electrode for a rechargeable lithium battery of claim 10, wherein the first binder and the first conductive material constitute a first functional additive,
wherein the second binder and the second conductive material constitute a second functional additive, and
wherein a weight ratio of the first functional additive in the first active material layer is equal to or lower than a weight ratio of the second functional additive in the second active material layer.

12. The positive electrode for a rechargeable lithium battery of claim 11, wherein a ratio of the weight ratio of the second functional additive to the weight ratio of the first functional additive is about 1 to about 4.5.

13. The positive electrode for a rechargeable lithium battery of any one of claims 10 to 12, wherein an amount of the first binder is about 1.2 parts by weight to about 3 parts by weight with respect to 100 parts by weight of the first active material layer, and
wherein an amount of the second binder is about 1.2 parts by weight to about 3 parts by weight with respect to 100 parts by weight of the second active material layer.

14. The positive electrode for a rechargeable lithium battery of any one of claims 10 to 13, wherein an amount of the first conductive material is about 1.2 parts by weight to about 3 parts by weight with respect to 100 parts by weight of the first active material layer, and
an amount of the second conductive material is about 1.2 parts by weight to about 3 parts by weight with respect to 100 parts by weight of the second active material layer.

15. The positive electrode for a rechargeable lithium battery of any one of claims 10 to 14, wherein with respect to a total amount of the first particles, the second particles, and the third particles included in the first active material layer and the second active material layer, the amount of the second particles is about 15 wt% to about 30 wt%.
